Europäisches Patentamt

European Patent Office

Office européen des brevets

(19)

(11) **EP 0 712 216 A1**

(12) **EUROPÄISCHE PATENTANMELDUNG**

(43) Veröffentlichungstag:
  15.05.1996 Patentblatt 1996/20

(51) Int. Cl.$^6$: **H04B 10/08**, G01M 11/00

(21) Anmeldenummer: 95117419.2

(22) Anmeldetag: 06.11.1995

(84) Benannte Vertragsstaaten:
  AT BE CH DE FR GB IT LI NL SE

(30) Priorität: 11.11.1994 DE 4440434

(71) Anmelder: **SIEMENS AKTIENGESELLSCHAFT**
  **D-80333 München (DE)**

(72) Erfinder: **Möhrmann, Karl Heinz, Dipl.-Ing.**
  **D-81369 München (DE)**

(54) **Verfahren zum Betrieb einer zwischen einer LWL-Anschlusseinheit und einer passiven optischen Schnittstelle liegenden optischen Breitbandanschlussleitung**

(57)   Von einer LWL-Anschlußeinheit aus wird zusammen mit dem Informationssignal ein Überwachungssignal übertragen, und an der passiven Schnittstelle wird ein kleiner Teil des optischen Signals abgezweigt und zur Anschlußeinheit zurückübertragen und dort gemeinsam mit dem von der Gegenseite her empfangenen optischen Signal dem optoelektrischen Wandler zugeführt; das im elektrischen Empfangssignal enthaltene reflektierte Überwachungssignal, das hinsichtlich seiner Reflexion an der passiven optischen Schnittstelle ausgewertet wird, wird zusätzlich zur Regelung des optischen Downstream-Signalpegels an der passiven optischen Schnittstelle ausgenutzt.

FIG 1

EP 0 712 216 A1

**Beschreibung**

Ein optischer B-ISDN-Teilnehmeranschluß wird gemäß CCITT üblicherweise so realisiert, daß am Ende desjenigen Teils der optischen Teilnehmeranschlußleitung, für welchen der Netzbetreiber zuständig ist, d.h. an der sogenannten $U_B$-Schnittstelle, die optische Leitung mit einer sogenannten Network Termination (NT1) abgeschlossen ist (CCITT Rec. I.432).

Dieser NT1-Leitungsabschluß umfaßt optoelektrische und elektrooptische Wandler, schließt den netzseitigen Teil der Anschlußleitung im Hinblick auf Operation, Administration and Maintenance (OAM) korrekt ab und stellt in Richtung zum Teilnehmer eine standardisierte bidirektionale Breitband-Schnittstelle, die sogenannte $T_B$-Schnittstelle, auch User-Network-Interface (UNI) genannt, zur Verfügung. Die Signale in den beiden Übertragungsrichtungen weisen sowohl auf der Vermittlungsseite des Leitungsabschlusses NT1 (an der $U_B$-Schnittstelle) als auch auf der Teilnehmerseite (an der $T_B$-Schnittstelle) eine Brutto-Datenrate von jeweils 155,52 Mbit/s auf und bestehen entweder aus einer Folge von byteweisen Rahmen gemäß der ersten Stufe STM1 (STM = Synchronous Transport Module) der sogenannten Synchronen Digitalen Hierarchie (SDH), in deren informationstragendem Teil sogenannte ATM-Zellen (max. 149,76 Mbit/s) mit je 53 Byte Länge übertragen werden (ATM = Asynchronous Transfer Mode), oder aus einer reinen Folge von ATM-Zellen, wobei die für die Informationsübertragung nutzbare Zellendatenrate ebenfalls 149,76 Mbit/s beträgt.

Da der NT1-Leitungsabschluß relativ komplex ist und Platz, elektrische Leistung sowie relativ teure elektrooptische und optoelektrische Wandler benötigt, ggf. sogar eine Batteriepufferung, um Störungen im EVU-Netz zu überbrücken, entstanden bei CCITT und ETSI Vorschläge, optische B-ISDN-Teilnehmeranschlüsse mit einer sog. "passiven NT1" zu realisieren, d.h. an der fernmelderechtlichen Schnittstelle zwischen Netzbetreiber und Nutzer, bis zu welcher der Netzbetreiber die Verantwortung für die einwandfreie Funktion hat, im wesentlichen einfach einen (bzw. zwei) optische(n) Stecker vorzusehen (CCITT COM XVIII No. D.928, D.1119 und D.1144; ETSI NA5 No. TD90/96; ETSI TM3 No. (unnumeriert)).

Eine ähnliche Situation existiert in den USA, wo im Gegensatz zu den Verhältnissen in Europa und Japan sowie den einschlägigen ETSI- und CCITT-Empfehlungen die Schnittstelle zwischen Netzbetreiber und Nutzer nicht die $T_B$-Schnittstelle, sondern die $U_B$-Schnittstelle ist; der NT1-Leitungsabschluß befindet sich somit zur Gänze im Besitz des angeschlossenen Teilnehmers. In den USA gibt es ähnliche Vorschläge wie für die "passive NT1", wobei davon ausgegangen wird, daß auf der Teilnehmerseite eine optische Busstruktur mit Anzapfungen (eine sog. "daisy chain") angeschlossen wird, welche die einfache Realisierung von LANs (Local Area Networks) erlaubt.

Die optische Netz/Teilnehmer-Schnittstelle ($T_B$) zwischen Network Termination NT1 und Teilnehmer ist bei CCITT bzw. ETSI noch nicht in vollem Umfang standardisiert (siehe CCITT-Empfehlung I.432). Es besteht eine Präferenz für die Verwendung des optischen Wellenlängenbereichs um 1310 nm (in Anlehnung an CCITT-Empfehlung G.957). Damit bietet sich eine Zwei-Faser-Lösung (getrennte Fasern für Hin- und Rückrichtung) an, doch ist eine Ein-Faser-Lösung in CCITT-Empfehlung I.432 nicht ausgeschlossen.

Eine "passive NT1" bringt eine Reihe von Problemen mit sich, wie sie beispielsweise in einem Beitrag der German Telecommunications Industry and DBP-Telecom zu ETSI TM3, Korfu, Oktober 1991, beschrieben wurden. Ein besonderes Problem ist die Bereitstellung des standardgemäßen Signalpegels an der Teilnehmer-Schnittstelle, die ggf. generell beschränkte Reichweiten bzw. hohe optische Sendeleistungen und Empfängerempfindlichkeiten bedingt, da die regenerierende und signalverstärkende Wirkung eines konventionellen NT1-Leitungsabschlußes fehlt.

In jedem Falle muß der Teilnehmerabschluß im Hinblick auf seine einwandfreie Funktion automatisch dauerüberwacht werden, wobei es sich für den Netzbetreiber als wünschenswert erwiesen hat, auch automatisch überwachen zu können, ob auf eine auf einer optischen Teilnehmer-Anschlußleitung auftretende Störung bzw. Unterbrechung noch im Verantwortungsbereich des Netzbetreibers liegt.

Hierzu sind bereits Verfahren zur Überwachung des zwischen einer LWL-Anschlußeinheit, insbesondere der vermittlungsseitigen Teilnehmer-Anschlußeinheit, und einer definierten passiven optischen Schnittstelle liegenden Teils einer optischen Breitband-Anschlußleitung, insbesondere -Teilnehmeranschlußleitung, bekannt (DE-A1-4 427 973; DE-A1-4 328 484; DE-A1-4 328 486; DE-A1-4 428 350; DE-A1-4 342 792), denen zufolge

-　von der LWL-Anschlußeinheit her zusammen mit dem über die optische Breitband-Anschlußleitung in Downstream-Richtung zu übertragenden Informationssignal auch ein Überwachungssignal übertragen wird,

-　von der passiven Schnittstelle her ein kleiner Anteil des von der Anschlußeinheit her übertragenen optischen Downstream-Signals in Upstream-Richtung zurück zur Anschlußeinheit geführt wird, wo es in dem dort vorgesehenen optischen Empfänger gemeinsam mit ggf. an sonstigen Reflexionsstellen der optischen Breitband-Anschlußleitung reflektierten Anteilen des optischen Downstream-Signals und dem über die optische Breitband-Anschlußleitung empfangenen optischen Upstream-Signal in ein elektrisches Signal gewandelt wird,

-　und das darin enthaltene reflektierte Überwachungssignal hinsichtlich seiner Reflexion an der passiven optischen Schnittstelle ausgewertet wird.

Hiervon ausgehend zeigt die Erfindung nun einen vorteilhaften Weg zur Bereitstellung des in Abwärtsrichtung (zum Teilnehmer hin) gewünschten optischen Signalpegels an der passiven optischen Schnittstelle.

Die Erfindung betrifft ein Verfahren zum Betrieb einer zwischen einer LWL-Anschlußeinheit, insbesondere der vermittlungsseitigen Teilnehmer-Anschlußeinheit, und einer definierten passiven optischen Schnittstelle liegenden optischen Breitband-Anschlußleitung, insbesondere -Teilnehmeranschlußleitung; dieses Verfahren ist erfindungsgemäß dadurch gekennzeichnet, daß bei Überwachung des zwischen der LWL-Anschlußeinheit und der definierten passiven optischen Schnittstelle liegenden Teils der optischen Breitband-Anschlußleitung in der Weise,

- daß von der LWL-Anschlußeinheit her zusammen mit dem über die optische Breitband-Anschlußleitung in Downstream-Richtung zu übertragenden Informationssignal auch ein Überwachungssignal übertragen wird,
- daß von der passiven Schnittstelle her ein kleiner Anteil des von der Anschlußeinheit her übertragenen optischen Downstream-Signals in Upstream-Richtung zurück zu der Anschlußeinheit geführt wird, wo es in dem dort vorgesehenen optischen Empfänger gemeinsam mit ggf. an sonstigen Reflexionsstellen der optischen Breitband-Anschlußleitung reflektierten Anteilen des optischen Downstream-Signals und dem über die optische Breitband-Anschlußleitung empfangenen optischen Upstream-Signal in ein elektrisches Signal gewandelt wird,
- und daß das darin enthaltene reflektierte Überwachungssignal hinsichtlich seiner Reflexion an der passiven optischen Schnittstelle ausgewertet wird,

das reflektierte Überwachungssignal zusätzlich zur Regelung des optischen Downstream-Signalpegels an der passiven optischen Schnittstelle ausgenutzt wird.

Die Erfindung ermöglicht vorteilhafterweise eine anschlußleitungsindividuelle Bereitstellung des in Abwärtsrichtung (zum Teilnehmer hin) gewünschten optischen Signalpegels an der passiven optischen Schnittstelle unter Mitausnutzung eines ohnehin übertragenen Überwachungssignals, wobei in weiterer Ausgestaltung der Erfindung das reflektierte Überwachungssignal unmittelbar zur Regelung der Ausgangsleistung des optischen Senders der Anschlußeinheit und damit dann mittelbar zur Regelung des optischen Downstream-Signalpegels an der passiven optischen Schnittstelle ausgenutzt werden kann.

Mit der Regelung läßt sich, unter Berücksichtigung aller Toleranzen, an der passiven optischen Schnittstelle auch bei individuell größerer Anschlußleitungslänge der in Abwärtsrichtung (zum Teilnehmer hin) nach der UNI-Spezifikation erforderliche optische Signalpegel bereitstellen; dabei weist die Regelkennlinie zweckmäßigerweise eine Begrenzung auf, so daß bei einem Ausfall des Systems ein unzulässiges Hochlaufen der optischen Sendeleistung durch rechtzeitiges Abschalten des optischen Senders (Lasers) vermieden wird.

In Aufwärtsrichtung (vom Teilnehmer weg) muß das System mit der durch die UNI-Spezifikation vorgegebenen beschränkten Sendeleistung des Teilnehmers auskommen, so daß die Überbrückung einer individuell größeren Anschlußleitungslänge ggf. durch Verwendung eines hinreichend empfindlichen optischen Empfängers (z.B. APD-Empfänger) in der vermittlungsseitigen Abschlußeinrichtung der optischen Strecke zu gewährleisten ist, wobei eine hinreichend große Empfängerdynamik andererseits auch sehr kurze Anschlußleitungslängen akzeptabel macht.

Weitere Besonderheiten der Erfindung werden aus der nachfolgenden Beschreibung anhand der Zeichnungen ersichtlich. Dabei verdeutlicht

Fig. 1 die Signalpegel-Bereitstellung bei einer optischen Breitband-Anschlußleitung mit nur einer optischen Faser und

Fig. 2 die Signalpegel-Bereitstellung bei einer optischen Breitband-Anschlußleitung mit zwei getrennten optischen Fasern für die beiden Übertragungsrichtungen.

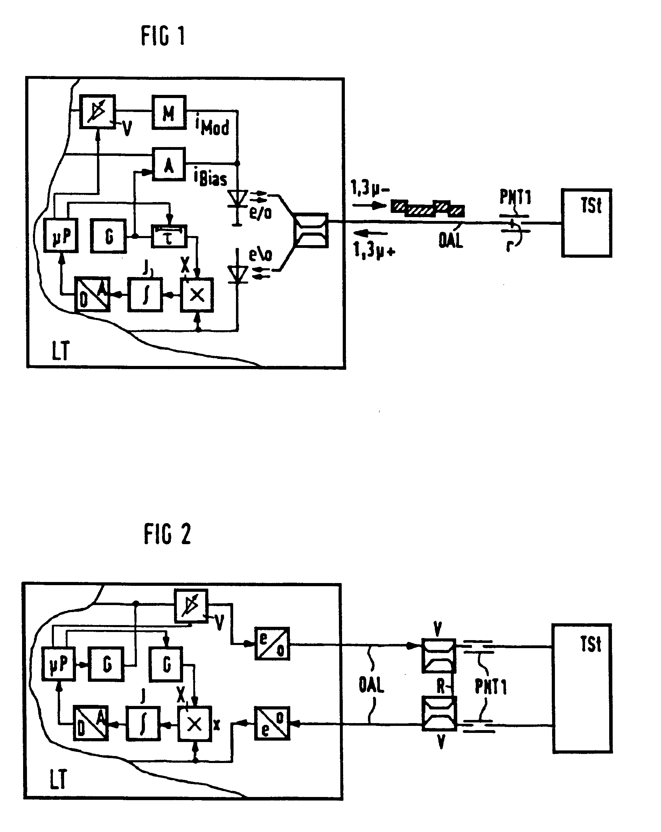

In Fig. 1 ist schematisch in einem zum Verständnis der Erfindung erforderlichen Umfange ein bidirektionales LWL-(Lichtwellenleiter-)Telekommunikationssystem mit einer (vorzugsweise Monomode-)LWL-Anschlußleitung OAL mit nur einer optischen Faser für die Übertragung der optischen Signale beider Übertragungsrichtungen dargestellt; diese optische Anschlußleitung, die sich im Ausführungsbeispiel nach Fig. 1 zwischen einer vermittlungsseitigen Teilnehmer-Anschlußeinheit LT und einer Teilnehmerstelle TSt erstreckt, werde von der Vermittlungsseite her bis zu einer passiven optischen Schnittstelle PNT1 hin überwacht.

Im betrachteten Ausführungsbeispiel ist, wie dies auch in Fig. 1 angedeutet ist, die passive Schnittstelle PNT1 mit einer optischen Steckverbindung realisiert, bei der die optische Stirnfläche des vermittlungsseitig angeordneten Steckverbindungsteils mit einer reflektierenden Schicht r versehen sein möge.

An der passiven Schnittstelle PNT1 wird ein kleiner Teil des von der Anschlußeinheit LT her zur Teilnehmerstelle TSt hin übertragenen optischen Signals abgezweigt und in Rückwärtsrichtung zurück zur Anschlußeinheit LT geführt. Dies geschieht im Ausführungsbeispiel nach Fig. 1 in der Weise, daß an der passiven Schnittstelle PNT1 ein Teil des von der Anschlußeinheit LT her übertragenen Lichts reflektiert wird. Das zur Anschlußeinheit LT rückgeführte optische Signal wird dort im optischen Empfänger e\o (ggf. gemeinsam mit dem von der Teilnehmerstelle TSt her empfangenen optischen Signal) in ein elektrisches Signal gewandelt.

Durch entsprechende technologische Maßnahmen und ggf. Kontrollmessungen ist dabei eine hinreichend genaue Kenntnis des prozentualen Anteils reflektierter Lichtleistung zu gewährleisten; die Signaldämpfung ist im Ausführungsbeispiel nach Fig. 1, demzufolge die optische Anschlußleitung OAL nur eine, die optischen Signale beider Übertragungsrichtungen übertragende optische Faser aufweist, in Hin- und Rückrichtung die gleiche (Symmetrie).

Im Ausführungsbeispiel nach Fig. 1, demzufolge die optische Anschlußleitung OAL nur eine optische Faser aufweist, über die die optischen Signale beider Übertragungsrichtungen übertragen werden, kann diese Übertragung in beiden Richtungen im gleichen optischen Fenster vor sich gehen: Die Wellenlänge des vermittlungsseitigen Lasersenders e/o ist dabei mit z.B. 1,3 μ angenähert gleich der Wellenlänge des (in Fig. 1 nicht im einzelnen dargestellten) elektrooptischen Wandlers der Teilnehmerstelle TSt; um gegenseitige Störungen der beiden elektrooptischen Wandler auch in keine Isolatoren enthaltenden kostenoptimierten Systemen und ein - ggf. zu unerwünschten Störungen sowohl des Nutzsignals als auch des Pilottonsignals führendes - mögliches Heterodyning (Bildung von Mischprodukten der verschiedenen Signale auf Grund des nichtlinearen Verhaltens des optischen Empfängers) zu vermeiden, dürfen die für die beiden Übertragungsrichtungen verwendeten Wellenlängen indessen nicht exakt oder nahezu exakt gleich sein. In Fig. 1 sind die Wellenlängen daher mit 1,3 μ- und 1,3 μ+ bezeichnet. Statt eines bei 1,3 μ liegenden optischen Fensters kann aber auch ein beispielsweise bei 1,55 μ liegendes optisches Fenster benutzt werden.

Werden in Abweichung von den in Fig. 1 angedeuteten Verhältnissen die optischen Signale der beiden Übertragungsrichtungen in unterschiedlichen optischen Fenstern, beispielsweise bei 1,3 μ in der einen Übertragungsrichtung und bei 1,55 μ in der anderen Übertragungsrichtung, übertragen, so kann die Reflexionsstelle an der passiven optischen Schnittstelle PNT1 auch wellenlängenselektiv ausgebildet sein, so daß im wesentlichen nur das in Richtung zur Teilnehmerstelle TSt hin übertragene, das - vorzugsweise durch ein Pseudo-Noise-(PN-)Binärsignal gebildetes - Überwachungssignal enthaltende optische Signal teilweise reflektiert wird.

Generell sind jedenfalls an einer passiven optischen Schnittstelle, wie die vorstehenden Erläuterungen verdeutlichen, verschiedene Betriebsarten möglich wie z.B.

1-Faser-Wellenlängenmultiplex mit 1,3μ+ und 1,3μ-, 1-Faser-Wellenlängenmultiplex mit 1,5μ und 1,3μ, und 2-Faser-Betrieb;
möglich ist auch eine Datensignalübertragung in der einen Richtung im Basisband und in der anderen Richtung in modulierter Form.
Das Erfindungsprinzip kann unabhängig von der verwendeten optischen Konfiguration und der Datenübertragungsart angewendet werden. Lediglich die Dämpfungs- und Reflexionsparameter unterscheiden sich. Aus diesem Grund ist auch die optische Schaltung in Fig. 1 nur als Prinzipschaltbild zu verstehen.

In Fig. 1 ist angedeutet, daß der als optischer Sender vorgesehenen Laserdiode eine Modulationsschaltung M für das zu übertragende Informationssignal und eine Arbeitspunktregelschaltung A zugehörig sind. Derartige Schaltungen sind grundsätzlich (z.B. aus DE-A1-41 25 075) bekannt und bedürfen hier keiner näheren Erläuterungen.

Im Ausführungsbeispiel gemäß Fig. 1 basiert die Überwachung auf der Korrelation einer von einem Generator G erzeugten Pseudo-Noise-(PN-)Bitfolge mit dem reflektierten Anteil eines optischen Signals, dessen Mittelwert mittels des Laservorstroms $i_{Bias}$ mit der gleichen PN-Bitfolge moduliert wurde.

Eine solche Überwachung wird bereits eingehend an anderer Stelle beschrieben (DE-A1-4 342 792; DE-A1-4 411 376).

Das zum einen mit dem von der LWL-Anschlußeinheit LT her über die optische Breitband-Anschlußleitung OAL in Downstream-Richtung zu übertragenden Informationssignal und zum anderen in seinem Mittelwert mit der PN-Bitfolge modulierte optische Downstream-Signal wird mehr oder weniger stark an allen etwaigen Reflexionsstellen der optischen Breitband-Anschlußleitung OAL und somit gerade auch an der eine definierte (gewollte) Reflexion (z.B. mit einem Reflexionsgrad von 10%) bewirkenden passiven optischen Schnittstelle PNT1 reflektiert.

Sollte eine Amplitudenmodulation des Laservorstroms technisch nicht realisierbar sein, so kann auch ein entsprechendes Überwachungssignal dem elektrischen Informationssignal additiv überlagert werden. Das Gesamtsignal moduliert dann die optische Ausgangsleistung des Lasers.

Das von der Anschlußeinheit LT in Upstream-Richtung empfangene optische Signal enthält das von der Teilnehmerstelle TSt herrührende TSt-Informationssignal, reflektierte Anteile des in Downstream-Richtung übertragenen LT-Informationssignals, reflektierte Anteile des PN-Binärsignals sowie Störungen (z.B. Rauschen) der Empfänger-Eingangsstufen, wobei die Pegel von der optischen Konfiguration und der Datenübertragungsart abhängen. Dieses Signal kann in der bereits an anderer Stelle (DE-A1-4 342 792; DE-A1-4 411 376) beschriebenen Weise zur Überwachung des zwischen der LWL-Anschlußeinheit LT und der definierten passiven optischen Schnittstelle PNT1 liegenden Teils der optischen Breitband-Anschlußleitung OAL genutzt werden:
Das Signal wird, - ggf. verstärkt, aber noch nicht (zeit)regeneriert, - mit der um eine Verzögerungszeitspanne τ, die der Signallaufzeit von der Anschlußeinheit LT aus zur passiven Schnittstelle PNT1 hin und wieder zurück entspricht, verzögerten PN-Folge korreliert, d.h. multipliziert und anschließend über mehrere PN-Sequenzen hinweg integriert; das aus der Korrelation resultierende Ausgangssignal entspricht mit seiner Amplitude den reflektierten Signalanteilen mit im Bereich der Zeitverzögerung τ liegender optischer Signallaufzeit. Dieses Korrelationssignal wird schließlich signallaufzeitgerecht auf das Auftreten des von der passiven Schnittstelle PNT1 her reflektierten Pseudo-Noise-Binärsignals überwacht, was im Wege einer Amplituden-Schwellwertentscheidung vor sich gehen kann.

Die Zeitverzögerung τ kann vorteilhaft dadurch realisiert werden, daß die PN-Folgen für den Vorstrommodulator A (in Fig.1) und für den Korrelator X,J (in Fig.1 und Fig.2) von zwei getrennten, mit Schieberegisterketten gebildeten PN-Generatoren (G,G in Fig. 2) erzeugt werden, bei denen unterschiedliche Startwerte in Form einer entsprechend unterschiedlichen Vorbelegung ihrer Schieberegisterketten von einem Mikroprozessor μP her vorgegeben werden. Die Wahl dieser Startwerte bestimmt die zeitliche Verzögerung τ der dem Korrelator X, J (in Fig.1 und Fig.2) zugeführten PN-Folge gegenüber der dem Modulator (A in Fig.1; e/o in Fig.2) zugeführten PN-Folge.

Durch die der Multiplikation von reflektiertem Signal und zeitverzögertem Signal nachfolgende Integration werden Störterme ausgefiltert. Das erreichbare Signal-Stör-Verhältnis des integrierten Signals und damit des Korrelatorausgangssignals hängt von den Parametern der optischen Signalanteile, wesentlich aber auch von der Integrationszeit ab. Das Korrelatorausgangssignal (Integrationsergebnis) kann A/D-gewandelt und im nachfolgenden Mikroprozessor μP weiterverarbeitet werden. Bei bekannter Gruppengeschwindigkeit des optischen Signals kann die Entfernung des Reflexionsortes errechnet werden.

Der Mikroprozessor μP kann zunächst auch in einem Einmeßvorgang die Einstellung verschiedener Zeitverzögerungen τ übernehmen, um alle Reflexionsanteile auf den einzelnen Streckenabschnitten zu bestimmen. Die Ortsauflösung Δl wächst hierbei linear mit der Taktrate an, mit der der Laservorstrom amplitudenmoduliert wird; sie beträgt $\Delta l = c/2f$, worin c die Gruppengeschwindigkeit des optischen Signals ist und f die Taktfrequenz der Pseudo-Noise-Bitfolge. Die maximal überwachbare Streckenlänge $l_{max}$ wird auch durch die zeitliche Länge der PN-Periode bestimmt; sie beträgt $l_{max} = c \cdot p/2f$, worin p die Periode der PN-Bitfolge ist. Für den auf den Einmeßvorgang folgenden Normalbetrieb wird dann für die Überwachung des zwischen der LWL-Anschlußeinheit LT (in Fig.1 und Fig.2) und der definierten passiven optischen Schnittstelle PNT1 (in Fig.1 und Fig.2) liegenden Teils der optischen Breitband-Anschlußleitung OAL (in Fig.1 und Fig.2) eine der Schnittstellenentfernung entsprechende feste Zeitverzögerung τ gewählt, um das zeitgerechte Auftreten des von der passiven Schnittstelle PNT1 (in Fig.1 und Fig.2) her reflektierten Pseudo-Noise-Binärsignals an Hand des Auftretens einer entsprechend hohen Korrelatorausgangssignalamplitude A zu überwachen. Da sich im Falle einer Unterbrechung des optischen Übertragungsweges die Refexionsverhältnisse ändern, braucht man nur Abweichungen der Korrelationssignalamplitude von dem beim Einmeßvorgang festgestellten Wert zu ermitteln und zu bewerten.

Das reflektierte Überwachungssignal wird nun zusätzlich zur Regelung des optischen Downstream-Signalpegels an der passiven optischen Schnittstelle ausgenutzt. Grundsätzlich muß für die Ermittlung der Amplitudeninformation aus dem reflektierten Signal der Einfluß des Informationssignals eliminiert werden. Hierfür gibt es verschiedene Möglichkeiten. So wird beispielsweise im Ausführungsbeispiel gemäß Fig. 1 die Amplitude des empfangenen reflektierten Signalanteils im Beispiel in der ohnehin vorhandenen Korrelatorschaltung X, J ausgewertet und das Ergebnis über den Mikroprozessor μP einer Vergleicher- und Verstärker-Schaltung V zugeführt, in welcher der Pegel (Amplitude) mit einem Sollwert verglichen wird; bei Abweichung vom Sollwert wird das dem Modulator M zugeführte Signal so lange in seiner Amplitude verändert (verstärkt oder geschwächt), bis der Empfangssignalpegel mit dem Sollwert übereinstimmt. Der Sollwert kann dabei, ggf. auf Grund einer vorausgehenden Kontrollmessung, so vorgegeben sein, daß an der passiven optischen Schnittstelle PNT1 (bzw. am User-Network-Interface) vom optischen Downstream-Signalpegel der erforderliche Mindestwert eingehalten wird. Die Einstellung kann ggf. durch Vergleich des Pegels des an der passiven optischen Schnittstelle PNT1 reflektierten Signals und des von der Teilnehmerstelle TSt her gesendeten Signals auch automatisch erfolgen, da der Sendepegel des von der Teilnehmerstelle TSt gesendeten Signals als bekannt angesehen werden kann.

Eine andere Möglichkeit der Auswertung der Amplitude des reflektierten Signals besteht bei Verwendung unterschiedlicher Wellenlängen für die beiden Übertragungsrichtungen in einer Trennung der Anteile des ankommenden optischen Signals durch optische Filter und Verwendung getrennter optischer Empfänger für das von der Teilnehmerstelle TSt kommende Nutzsignal und für das reflektierte Überwachungssignal.

In Fig. 2 ist schematisch in einem zum Verständnis der Erfindung erforderlichen Umfang ein Ausführungsbeispiel eines bidirektionalen LWL-Telekommunikationssystems mit einer (vorzugsweise Monomode-)LWL-Anschlußleitung OAL dargestellt, die für jede Übertragungsrichtung eine gesonderte optische Faser aufweist, wobei die optischen Signale der beiden Übertragungsrichtungen auf derselben Wellenlänge oder auf unterschiedlichen Wellenlängen übertragen werden können. Diese optische Anschlußleitung OAL, die sich im Ausführungsbeispiel nach Fig. 2 wiederum zwischen einer vermittlungsseitigen Teilnehmer-Anschlußeinheit LT und einer Teilnehmerstelle TSt erstreckt, werde wiederum von der Vermittlungsseite her bis zu einer passiven optischen Schnittstelle PNT1 hin überwacht. Hierzu werde dem über die LWL-Anschlußleitung OAL zu übertragenden Informationssignal wiederum ein PN-Binärsignal hinzuaddiert.

An der passiven Schnittstelle PNT1 wird wiederum ein kleiner Teil des von der Anschlußeinheit LT her zum Teilnehmer TSt hin übertragenen optischen Signals abgezweigt und in Rückrichtung zurück zur Anschlußeinheit LT geführt. In Fig. 2 ist dazu angedeutet, daß an der der Anschlußeinheit LT zugewandten Seite der passiven optischen Schnittstelle PNT1 Verzweiger V in Form von passiven optischen Kopplern vorgesehen sind, zwischen denen ein optischer Rückkopplungsweg R verläuft.

Die Ein- bzw. Auskopplung der optischen Signale kann dabei mittels unsymmetrischer passiver optischer Koppler vor sich gehen.

Über den Rückkopplungsweg R gelangt ein kleiner Teil des von der Teilnehmer-Anschlußheit LT her zur Teilnehmerstelle TSt hin übertragenen optischen Signals zurück in Richtung zur Teilnehmer-Anschlußeinheit LT, wo es in dem dort vorgesehenen optischen Empfänger e\o gemeinsam mit dem vom Teilnehmer TSt her empfangenen optischen Signal in ein elektrisches Signal gewandelt wird.

Auch hier ist auf Grund entsprechender technologischer Maßnahmen und ggf. Kontrollmessungen von einer hinreichend genauen Kenntnis des prozentualen Anteils reflektierter Lichtleistung auszugehen. Bezüglich der Signaldämpfung kann indessen nicht ohne weiteres davon ausgegangen werden, daß die durch Biegungen usw. bedingte Dämpfungserhöhung für beide Fasern, selbst wenn sie im gleichen Kabel geführt werden, gleich ist. Bei Inbetriebnahme der Strecke kann die Dämpfung in Hin- und Rückrichtung jedoch durch eine Kontrollmessung bestimmt werden, und etwaige Abweichungen von der Symmetrie können dann beim optischen Sender der vermittlungsseitigen Teilnehmer-Anschlußeinheit LT berücksichtigt werden.

Eine andere Möglichkeit zur Behebung des Symmetrieproblems besteht im Einsatz einer Einfaserleitung bis zur passiven Scnittstelle, wo sie bei Bedarf mittels eines passiven Kopplers in zwei Fasern (für die beiden Übertragungsrichtungen) aufgespalten werden kann.

Das von der Anschlußeinheit LT in Upstream-Richtung empfangene optische Signal, das in der auch schon an anderer Stelle (DE-A1-4 342 792; DE-A1-4 411 376) beschriebenen Weise zur Überwachung des zwischen der LWL-Anschlußeinheit LT und der definierten passiven optischen Schnittstelle PNT1 liegenden Teils der optischen Breitband-Anschlußleitung OAL genutzt werden kann, wird nun wiederum zur Regelung des optischen Downstream-Signalpegels an der passiven optischen Schnittstelle mitausgenutzt. Hierzu wird auch im Ausführungsbeispiel gemäß Fig. 2 die aus dem empfangenen Signal abgeleitete Information über die Amplitude des an der passiven optischen Schnittstelle PNT1 reflektierten Signalanteils einer Vergleicher- und Verstärker-Schaltung V zugeführt, in welcher bei Abweichung des Empfangssignalpegels von einem Sollwert das dem sendeseitigen Modulator M zugeführte Signal so lange in seiner Amplitude verändert (verstärkt oder geschwächt) wird, bis der Empfangssignalpegel mit dem Sollwert übereinstimmt. Die Information über die Amplitude des empfangenen reflektierten Signalanteils wird wiederum in der ohnehin vorhandenen Korrelatorschaltung abgeleitet und über den Processor µP der Schaltung V zugeführt.

Auch die bereits im Zusammenhang mit FIG 1 erwähnte optische Trennung von Nutzsignal und reflektiertem Überwachungssignal ist möglich, wenn für die beiden Übertragungsrichtungen unterschiedliche Wellenlängen verwendet werden.

Sollte eine Amplitudenmodulation des Laservorstroms bzw. eine additive Signalüberlagerung zu unzulässigen Störpegeln innerhalb der Nutzbandbreite des optischen Signals führen, so kann in der LWL-Anschlußeinheit LT dem Ansteuersignal des dort vorgesehen optischen Senders auch ein mit dem Pseudo-Noise-Binärsignal moduliertes Pilottonsignal hinzugefügt werden, dessen Frequenz außerhalb des vom in Upstream-Richtung zu übertragenden Informationssignal belegten Frequenzbereichs liegt. Damit kann die Steuerinformation für die Vergleicherund Verstärker-Schaltung V leicht durch Abtrennung des reflektierten Signals mit einem elektrischen Filter ermittelt werden. Dies gilt sowohl für das in FIG 2 als auch für das in FIG 1 dargestellte Ausführungsbeispiel.

Die Erfindung ist nicht daran gebunden, daß bei einer Vermittlungsstelle jeweils teilnehmerindividuelle LWL-Anschlußeinheiten (LT in Fig. 1 und Fig. 2) jeweils mit einer daran angeschlossenen, teilnehmerindividuellen optischen Anschlußleitung (OAL in Fig. 1 und Fig. 2) vorgesehen sind; die Erfindung kann vielmehr auch in einem passiven optischen Netz Anwendung finden, in welchem eine Mehrzahl von Teilnehmern oder, allgemein gesagt, von dezentralen Telekommunikationseinrichtungen jeweils über eine eigene optische Anschlußleitung mit einem optischen Verzweiger verbunden sind, der direkt oder über wenigstens einen weiteren optischen Verzweiger mit einer gemeinsamen vermittlungsseitigen LWL-Anschlußeinheit über einen Lichtwellenleiter-Bus verbunden ist.

Von der Vermittlungsseite her gesehen vor den Verzweigungen wird dabei eine passive optische Schnittstelle PNT1 vorgesehen, so daß von der Vermittlungsseite her eine Überwachung der optischen Übertragungsstrecke und eine Regelung des optischen Downstream-Signalpegels zumindest bis zu dieser Schnittstelle möglich werden; die zu Fig. 1 (bzw. bei zweifaseriger Ausführung Fig. 2) gemachten Ausführungen gelten dabei in entsprechender Weise.

**Patentansprüche**

1.  Verfahren zum Betrieb einer zwischen einer LWL-Anschlußeinheit, insbesondere der vermittlungsseitigen Teilnehmer-Anschlußeinheit (LT), und einer definierten passiven optischen Schnittstelle (PNT1) liegenden optischen Breitband-Anschlußleitung, insbesondere -Teilnehmeranschlußleitung (OAL), **dadurch gekennzeichnet,** daß bei Überwachung des zwischen der LWL-Anschlußeinheit (LT) und der definierten passiven optischen Schnittstelle (PNT1) liegenden Teils der optischen Breitband-Anschlußleitung (OAL) in der Weise,

- daß von der LWL-Anschlußeinheit (LT) her zusammen mit dem über die optische Breitband-Anschlußleitung (OAL) in Downstream-Richtung zu übertragenden Informationssignal auch ein Überwachungssignal übertragen wird,
- daß von der passiven Schnittstelle (PNT1) her ein kleiner Anteil des von der Anschlußeinheit (LT) her übertragenen optischen Downstream-Signals in Upstream-Richtung zurück zur Anschlußeinheit (LT) geführt wird, wo es in dem dort vorgesehenen optischen Empfänger gemeinsam mit ggf. an sonstigen Reflexionsstellen der optischen Breitband-Anschlußleitung reflektierten Anteilen des optischen Downstream-Signals und dem über die optische Breitband-Anschlußleitung (OAL) empfangenen optischen Upstream-Signal in ein elektrisches Signal gewandelt wird,
- und daß das darin enthaltene reflektierte Überwachungssignal hinsichtlich seiner Reflexion an der passiven optischen Schnittstelle (NT1) ausgewertet wird,

das reflektierte Überwachungssignal zusätzlich zur Regelung des optischen Downstream-Signalpegels an der passiven optischen Schnittstelle (NT1) ausgenutzt wird.

2. Verfahren nach Anspruch 1,
**dadurch gekennzeichnet,**
daß das reflektierte Überwachungssignal über eine Regelung der Ausgangsleistung des optischen Senders der Anschlußeinheit (LT) den optischen Downstream-Signalpegel an der passiven optischen Schnittstelle (NT1) regelt.

3. Verfahren nach Anspruch 2,
**dadurch gekennzeichnet,**
daß das elektrische Upstream-Signal in einer Korrelationsschaltung (X, J) mit dem durch ein Pseudo-Noise-Binärsignal gebildeten ursprünglichen, zwischenzeitlich verzögerten Überwachungssignal korreliert wird und das dabei erhaltene Korrelationssignal die Regelung des Downstream-Signalpegels in einer sendeseitig im Modulationszweig liegenden Vergleicher- und Verstärker-Schaltung (V) bewirkt.

4. Verfahren nach Anspruch 3,
**dadurch gekennzeichnet,**
daß in der LWL-Anschlußeinheit (LT) der Vorstrom der dort als optischer Sender vorgesehenen Laserdiode mit dem Pseudo-Noise-Binärsignal amplitudenmoduliert wird.

5. Verfahren nach Anspruch 3,
**dadurch gekennzeichnet,**
daß in der LWL-Anschlußeinheit (LT) dem elektrischen Ansteuersignal des dort vorgesehenen optischen Senders (e/o) das Pseudo-Noise-Binärsignal additiv überlagert wird.

6. Verfahren nach einem der Ansprüche 3 bis 5,
**dadurch gekennzeichnet,**
daß das sendeseitig benötigte Pseudo-Noise-Binärsignal und das dem Korrelator zuzuführende zeitlich verzögerte Pseudo-Noise-Binärsignal von zwei getrennten Pseudo-Noise-Generatoren (G, G) mit entsprechend unterschiedlichen Startwerten erzeugt werden.

## FIG 1

## FIG 2

Europäisches
Patentamt

**EUROPÄISCHER RECHERCHENBERICHT**

Nummer der Anmeldung

EP 95 11 7419

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 258 843 (TEKTRONIX INC) 9.März 1988<br>* Zusammenfassung; Abbildung 1 *<br>* Spalte 4, Zeile 3 - Zeile 39 *<br>--- | 1-5 | H04B10/08<br>G01M11/00 |
| A | WO-A-92 11710 (BRITISH TELECOMM) 9.Juli 1992<br>* Zusammenfassung; Abbildungen 1,2 *<br>* Seite 6, Zeile 17 - Seite 7, Zeile 15 *<br>--- | 1,3-5 | |
| A | PATENT ABSTRACTS OF JAPAN<br>vol. 018 no. 509 (E-1610) ,26.September 1994<br>& JP-A-06 177837  (NIPPON TELEGR & TELEPH CORP)  24.Juni 1994,<br>* Zusammenfassung *<br>--- | 1,2 | |
| A,D | DE-A-41 25 075 (SIEMENS AG) 5.März 1992<br>* Zusammenfassung; Abbildungen 1,2 *<br>----- | 1,2 | |
| | | | **RECHERCHIERTE SACHGEBIETE (Int.Cl.6)**<br><br>H04B<br>G01M |

Der vorliegende Recherchenbericht wurde für alle Patentansprüche erstellt

| Recherchenort | Abschlußdatum der Recherche | Prüfer |
|---|---|---|
| DEN HAAG | 5.Februar 1996 | Goudelis, M |

EPO FORM 1503 03.82 (P04C03)